# EUROPEAN PATENT APPLICATION

(11) **EP 4 631 358 A1**
(43) Date of publication of application: **15.10.2025**
(21) Application number: 23900675.2
(22) Date of filing: 06.12.2023
(51) Int. Cl.: A23F 5/02

(54) **COFFEE BEANS AND PRODUCTION METHOD OF COFFEE BEANS**

(30) Priority: 06.12.2022 JP 2022194646
(71) Applicant: Suntory Holdings Limited, Osaka-shi, Osaka 530-8203 (JP)
(72) Inventor: SUGINO, Ryosuke, Kawasaki-shi, Kanagawa 211-0067 (JP); OCHIAI, Misa, Soraku-gun, Kyoto 619-0284 (JP); KATAYAMA, Makoto, Kawasaki-shi, Kanagawa 211-0067 (JP); TOGAMI, Keito, Soraku-gun, Kyoto 619-0284 (JP)
(74) Representative: Mewburn Ellis LLP
(86) International application number: PCT/JP2023/043579
(87) International publication number: WO 2024/122561

(57) **Abstract**

The present invention provides: coffee beans containing a larger amount of ethyl tiglate, which affects the coffee flavor, than conventional ones; a method for producing the same, etc. An aspect of the present invention provides coffee beans containing 0.1 ppm or more of ethyl tiglate. Another aspect of the present invention provides a production method of coffee beans containing 0.1 ppm or more of ethyl tiglate, the production method including: step (i) for adding a yeast to starting beans, wherein the starting beans are coffee cherries, wet parchment obtained by removing outer skin and pulp from coffee cherries, unroasted coffee beans, or a combination of two or more thereof; and step (ii) for fermenting the starting beans containing the yeast added thereto.

## Description

### Technical Field

The present invention relates to coffee beans and a method for producing coffee beans.

### Background Art

"Coffee beans" is a general term for coffee seeds and beans processed from coffee seeds. Coffee seeds are obtained from fruits (referred to as coffee berries or coffee cherries) of a plant of the family *Rubiaceae* called a coffee tree through removing pulp and thin skin from the fruits (refining). Of these, coffee beans before being subjected to roasting, which is a process of heating and roasting coffee beans, are referred to as green coffee beans, and coffee beans after going through the roasting are commonly referred to as roasted coffee beans.

Coffee beans to which an aroma component is imparted by fermentation have been known in the art. Patent Literature 1 discloses modified green coffee beans having from 2 to 3 times as much amount of a phenylethyl alcohol component as that of standard coffee beans, showing a relative area of phenylethyl alcohol of 0.11 to 0.25 obtained by performing GC/MS analysis on the modified green coffee beans to a relative area of 1.00 of ethyl hexanoate, which is a standard substance. The technique of Patent Literature 1 imparts a value-added flavor to a liquid coffee extract even without obtaining and using yeast or microorganisms.

Patent Literature 2 discloses a technique of improving aroma by adding assimilable components and yeast to coffee beans and subjecting the mixture to fermentation.

### Citation List

### Patent Literature

Patent Literature 1: JP 2018-050535 A
Patent Literature 2: JP 5032979 B

### Summary of Invention

### Technical Problem

In such circumstances, it is desired to provide coffee beans that can yield flavorful coffee. It is also desired to provide a flavorful coffee beverage.

### Solution to Problem

The present invention provides coffee beans and a method for producing coffee beans described below.
[1] Coffee beans containing 0.1 ppm or more of ethyl tiglate.
[2] The coffee beans according to [1], in which a content of ethyl tiglate is from 0.1 ppm to 300 ppm.
[3] The coffee beans according to [1] or [2], in which the coffee beans are green coffee beans or roasted coffee beans.
[4] The coffee beans according to any one of [1] to [3], in which the content of ethyl tiglate in the coffee beans is measured according to a measurement method below:
   measurement method
   in a test tube, 2 g of the coffee beans are placed, 150 mL of water and 4 mL of hexane are added, the mixture is distilled for 90 minutes in a distillation apparatus for quantification of essential oil, then, a hexane phase is adjusted to a volume of 4 mL, and the hexane phase is measured to determine the content of ethyl tiglate by gas chromatography-mass spectrometry using a gas chromatography-mass spectrometer below:
      gas chromatography-mass spectrometer
      model: 7890B/5977B [Agilent Technologies, Inc.]
      column: DB-WAX UI (φ 0.25 mm × 30 m, film thickness 0.25 µm) [Agilent Technologies, Inc.]
      injection method: pulsed split 15:1
      pulse pressure: 25 psi
      pulse time: 0.5 min
      temperature: 220°C at sample inlet
      column: a column temperature is maintained at 40°C for 5 minutes and increased at 10°C/min to 200°C
      gas flow rate: helium (carrier gas) 1 mL/min
      ion source temperature: 230°C
      ionization method: EI
      set mass number: m/z 113.
[5] A method for producing coffee beans containing 0.1 ppm or more of ethyl tiglate, the method including:
   (i) adding a yeast to raw material beans, the raw material beans being coffee cherries, wet parchment obtained by removing outer skin and pulp of coffee cherries, green coffee beans, or a combination of two or more of these; and
   (ii) fermenting the raw material beans containing the yeast added.
[6] The production method according to [5], in which the yeast is a yeast belonging to one or more selected from the group consisting of the genus *Magnusiomyces* and the genus *Saprochaete.*
[7] The production method according to [5] or [6], in which the yeast is selected from the group consisting of *Magnusiomyces magnusii, Magnusiomyces tetraspermus, Saprochaete suaveolens, Saprochaete japonica, Saprochaete gigas, Saprochaete fungicola,* and a combination of two or more of these.
[8] The production method according to any one of [5] to [7], in which in step (i), 0.01 g or more of isoleucine is added per kg of the raw material beans.
[9] The production method according to any one of [5] to [8], in which in step (ii), the raw material beans are fermented for 1 hour or more.
[10] The production method according to any one of [5] to [9], in which a content of ethyl tiglate in the coffee beans is measured according to a measurement method below:
   measurement method
   in a test tube, 2 g of the coffee beans are placed, 150 mL of water and 4 mL of hexane are added, the mixture is distilled for 90 minutes in a distillation apparatus for quantification of essential oil, then, a hexane phase is adjusted to a volume of 4 mL, and the hexane phase is measured to determine the content of ethyl tiglate by gas chromatography-mass spectrometry using a gas chromatography-mass spectrometer below:
      gas chromatography-mass spectrometer
      model: 7890B/5977B [Agilent Technologies, Inc.]
      column: DB-WAX UI (φ 0.25 mm × 30 m, film thickness 0.25 µm) [Agilent Technologies, Inc.]
      injection method: pulsed split 15:1
      pulse pressure: 25 psi
      pulse time: 0.5 min
      temperature: 220°C at sample inlet
      column: a column temperature is maintained at 40°C for 5 minutes and increased at 10°C/min to 200°C
      gas flow rate: helium (carrier gas) 1 mL/min
      ion source temperature: 230°C
      ionization method: EI
      set mass number: m/z 113.
[11] A coffee beverage containing a liquid extract of the coffee beans described in any one of [1] to [4] or the coffee beans obtained by the production method described in any one of [5] to [9].
[12] A coffee beverage containing one or more compounds selected from the group consisting of ethyl tiglate, isobutyl acetate, ethyl 2-methylbutyrate, ethyl isovalerate, isoamyl alcohol, and isoamyl acetate.
[13] The coffee beverage according to [12], containing:
   ethyl tiglate; and
   one or more compounds selected from the group consisting of isobutyl acetate, ethyl 2-methylbutyrate, ethyl isovalerate, isoamyl alcohol, and isoamyl acetate.
[14] The coffee beverage according to [12] or [13], in which a content of ethyl tiglate is from 5 to 5000 ppb.
[15] The coffee beverage according to any one of [12] to [14], satisfying one or more of (1) to (5) below:
   (1) a content of isobutyl acetate is from 5 to 5000 ppb;
   (2) a content of ethyl 2-methylbutyrate is from 1 to 5000 ppb;
   (3) a content of ethyl isovalerate is from 5 to 5000 ppb;
   (4) a content of isoamyl alcohol is from 100 to 20000 ppb; and
   (5) a content of isoamyl acetate is from 5 to 1000 ppb.
[16] The coffee beverage according to any one of [11] to [15], being a packaged beverage.

### Advantageous Effects of Invention

The present invention can provide coffee beans that can yield flavorful coffee.

The present invention can provide a method for producing coffee beans using coffee cherries, wet parchment, and/or green coffee beans as raw material beans in a coffee-producing country.

The present invention can provide a method for producing coffee beans using green coffee beans as raw material beans in a coffee-consuming country.

The present invention can provide a method for producing coffee beans that can be carried out during the transportation of coffee cherries, wet parchment, and/or green coffee beans.

The coffee beans according to an aspect of the present invention contains 0.1 ppm or more of ethyl tiglate, abundantly containing ethyl tiglate, which is not detected from commercially available coffee beans (Comparative Examples 1 to 15 described later), and can provide flavorful coffee.

The present invention can provide a flavorful coffee beverage.

### Description of Embodiments

### Coffee Beans

The coffee beans of the present invention are green coffee beans or roasted coffee beans. The coffee beans may include both green coffee beans and roasted coffee beans.

Green coffee beans are seeds contained in coffee berries (coffee cherries). A coffee cherry contains a seed inside, and the seed is covered with a sticky substance (mucilage), pulp (a part containing sugars and other nutrients), and an outer skin in this order. Green coffee beans may be those before drying or those after drying. In addition, green coffee beans may be in the bean state or at least partially ground state.

Roasted coffee beans are obtained by roasting green coffee beans. Roasted coffee beans may be in the bean state or at least partially ground state.

The coffee beans according to an aspect of the present invention contain 0.1 ppm or more of ethyl tiglate. The unit "ppm" is the ratio (mg/kg) of the mass (mg) of ethyl tiglate contained per kg of coffee beans.

The green coffee beans according to an aspect of the present invention contain 0.1 ppm or more of ethyl tiglate. In addition, the roasted coffee beans according to an aspect of the present invention contain 0.1 ppm or more of ethyl tiglate.

The content of ethyl tiglate contained in the coffee beans may be 0.1 ppm or more, 0.2 ppm or more, 0.3 ppm or more, 0.4 ppm or more, 0.5 ppm or more, 0.6 ppm or more, 0.7 ppm or more, 0.8 ppm or more, 0.9 ppm or more, 1.0 ppm or more, 1.5 ppm or more, 2.0 ppm or more, 2.5 ppm or more, 3.0 ppm or more, 3.5 ppm or more, 4.0 ppm or more, 4.5 ppm or more, 5.0 ppm or more, 5.5 ppm or more, 6.0 ppm or more, 6.5 ppm or more, 7.0 ppm or more, 7.5 ppm or more, 8.0 ppm or more, 8.5 ppm or more, 9.0 ppm or more, 9.5 ppm or more, 10.0 ppm or more, 10.5 ppm or more, 11.0 ppm or more, 11.5 ppm or more, 12.0 ppm or more, 12.5 ppm or more, 13.0 ppm or more, 13.5 ppm or more, 14.0 ppm or more, 14.5 ppm or more, 15.0 ppm or more, 15.5 ppm or more, 16.0 ppm or more, 16.5 ppm or more, 17.0 ppm or more, 17.5 ppm or more, 18.0 ppm or more, 18.5 ppm or more, 19.0 ppm or more, 19.5 ppm or more, 20.0 ppm or more, 25.0 ppm or more, 30.0 ppm or more, 35.0 ppm or more, 40.0 ppm or more, 45.0 ppm or more, 50.0 ppm or more, 75.0 ppm or more, 100 ppm or more, 200 ppm or more, or 300 ppm or more.

The content of ethyl tiglate contained in the coffee beans may be from 0.1 to 300 ppm, from 0.2 to 300 ppm, from 0.3 to 300 ppm, from 0.4 to 300 ppm, from 0.5 to 300 ppm, from 0.6 to 300 ppm, from 0.7 to 300 ppm, from 0.8 to 300 ppm, from 0.9 to 300 ppm, from 1.0 to 300 ppm, from 1.5 to 300 ppm, from 2.0 to 300 ppm, from 2.5 to 300 ppm, from 3.0 to 300 ppm, from 3.5 to 300 ppm, from 4.0 to 300 ppm, from 4.5 to 300 ppm, from 5.0 to 300 ppm, from 5.5 to 300 ppm, from 6.0 to 300 ppm, from 6.5 to 300 ppm, from 7.0 to 300 ppm, from 7.5 to 300 ppm, from 8.0 to 300 ppm, from 8.5 to 300 ppm, from 9.0 to 300 ppm, from 9.5 to 300 ppm, from 10.0 to 300 ppm, from 10.5 to 300 ppm, from 11.0 to 300 ppm, from 11.5 to 300 ppm, from 12.0 to 300 ppm, from 12.5 to 300 ppm, from 13.0 to 300 ppm, from 13.5 to 300 ppm, from 14.0 to 300 ppm, from 14.5 to 300 ppm, from 15.0 to 300 ppm, from 15.5 to 300 ppm, from 16.0 to 300 ppm, from 16.5 to 300 ppm, from 17.0 to 300 ppm, from 17.5 to 300 ppm, from 18.0 to 300 ppm, from 18.5 to 300 ppm, from 19.0 to 300 ppm, from 19.5 to 300 ppm, from 20.0 to 300 ppm, from 25.0 to 300 ppm, from 30.0 to 300 ppm, from 35.0 to 300 ppm, from 40.0 to 300 ppm, from 45.0 to 300 ppm, from 50.0 to 300 ppm, from 75.0 to 300 ppm, from 100 to 300 ppm, or from 200 to 300 ppm.

The content of ethyl tiglate contained in the coffee beans may be from 0.1 to 200 ppm, from 0.2 to 200 ppm, from 0.3 to 200 ppm, from 0.4 to 200 ppm, from 0.5 to 200 ppm, from 0.6 to 200 ppm, from 0.7 to 200 ppm, from 0.8 to 200 ppm, from 0.9 to 200 ppm, from 1.0 to 200 ppm, from 1.5 to 200 ppm, from 2.0 to 200 ppm, from 2.5 to 200 ppm, from 3.0 to 200 ppm, from 3.5 to 200 ppm, from 4.0 to 200 ppm, from 4.5 to 200 ppm, from 5.0 to 200 ppm, from 5.5 to 200 ppm, from 6.0 to 200 ppm, from 6.5 to 200 ppm, from 7.0 to 200 ppm, from 7.5 to 200 ppm, from 8.0 to 200 ppm, from 8.5 to 200 ppm, from 9.0 to 200 ppm, from 9.5 to 200 ppm, from 10.0 to 200 ppm, from 10.5 to 200 ppm, from 11.0 to 200 ppm, from 11.5 to 200 ppm, from 12.0 to 200 ppm, from 12.5 to 200 ppm, from 13.0 to 200 ppm, from 13.5 to 200 ppm, from 14.0 to 200 ppm, from 14.5 to 200 ppm, from 15.0 to 200 ppm, from 15.5 to 200 ppm, from 16.0 to 200 ppm, from 16.5 to 200 ppm, from 17.0 to 200 ppm, from 17.5 to 200 ppm, from 18.0 to 200 ppm, from 18.5 to 200 ppm, from 19.0 to 200 ppm, from 19.5 to 200 ppm, from 20.0 to 200 ppm, from 25.0 to 200 ppm, from 30.0 to 200 ppm, from 35.0 to 200 ppm, from 40.0 to 200 ppm, from 45.0 to 200 ppm, from 50.0 to 200 ppm, from 75.0 to 200 ppm, or from 100 to 200 ppm.

The content of ethyl tiglate contained in the coffee beans may be from 0.1 to 100 ppm, from 0.2 to 100 ppm, from 0.3 to 100 ppm, from 0.4 to 100 ppm, from 0.5 to 100 ppm, from 0.6 to 100 ppm, from 0.7 to 100 ppm, from 0.8 to 100 ppm, from 0.9 to 100 ppm, from 1.0 to 100 ppm, from 1.5 to 100 ppm, from 2.0 to 100 ppm, from 2.5 to 100 ppm, from 3.0 to 100 ppm, from 3.5 to 100 ppm, from 4.0 to 100 ppm, from 4.5 to 100 ppm, from 5.0 to 100 ppm, from 5.5 to 100 ppm, from 6.0 to 100 ppm, from 6.5 to 100 ppm, from 7.0 to 100 ppm, from 7.5 to 100 ppm, from 8.0 to 100 ppm, from 8.5 to 100 ppm, from 9.0 to 100 ppm, from 9.5 to 100 ppm, from 10.0 to 100 ppm, from 10.5 to 100 ppm, from 11.0 to 100 ppm, from 11.5 to 100 ppm, from 12.0 to 100 ppm, from 12.5 to 100 ppm, from 13.0 to 100 ppm, from 13.5 to 100 ppm, from 14.0 to 100 ppm, from 14.5 to 100 ppm, from 15.0 to 100 ppm, from 15.5 to 100 ppm, from 16.0 to 100 ppm, from 16.5 to 100 ppm, from 17.0 to 100 ppm, from 17.5 to 100 ppm, from 18.0 to 100 ppm, from 18.5 to 100 ppm, from 19.0 to 100 ppm, from 19.5 to 100 ppm, from 20.0 to 100 ppm, from 25.0 to 100 ppm, from 30.0 to 100 ppm, from 35.0 to 100 ppm, from 40.0 to 100 ppm, from 45.0 to 100 ppm, from 50.0 to 100 ppm, or from 75.0 to 100 ppm.

The content of ethyl tiglate contained in the coffee beans may be from 0.1 to 50.0 ppm, from 0.2 to 50.0 ppm, from 0.3 to 50.0 ppm, from 0.4 to 50.0 ppm, from 0.5 to 50.0 ppm, from 0.6 to 50.0 ppm, from 0.7 to 50.0 ppm, from 0.8 to 50.0 ppm, from 0.9 to 50.0 ppm, from 1.0 to 50.0 ppm, from 1.5 to 50.0 ppm, from 2.0 to 50.0 ppm, from 2.5 to 50.0 ppm, from 3.0 to 50.0 ppm, from 3.5 to 50.0 ppm, from 4.0 to 50.0 ppm, from 4.5 to 50.0 ppm, from 5.0 to 50.0 ppm, from 5.5 to 50.0 ppm, from 6.0 to 50.0 ppm, from 6.5 to 50.0 ppm, from 7.0 to 50.0 ppm, from 7.5 to 50.0 ppm, from 8.0 to 50.0 ppm, from 8.5 to 50.0 ppm, from 9.0 to 50.0 ppm, from 9.5 to 50.0 ppm, from 10.0 to 50.0 ppm, from 10.5 to 50.0 ppm, from 11.0 to 50.0 ppm, from 11.5 to 50.0 ppm, from 12.0 to 50.0 ppm, from 12.5 to 50.0 ppm, from 13.0 to 50.0 ppm, from 13.5 to 50.0 ppm, from 14.0 to 50.0 ppm, from 14.5 to 50.0 ppm, from 15.0 to 50.0 ppm, from 15.5 to 50.0 ppm, from 16.0 to 50.0 ppm, from 16.5 to 50.0 ppm, from 17.0 to 50.0 ppm, from 17.5 to 50.0 ppm, from 18.0 to 50.0 ppm, from 18.5 to 50.0 ppm, from 19.0 to 50.0 ppm, from 19.5 to 50.0 ppm, from 20.0 to 50.0 ppm, from 25.0 to 50.0 ppm, from 30.0 to 50.0 ppm, from 35.0 to 50.0 ppm, from 40.0 to 50.0 ppm, or from 45.0 to 50.0 ppm.

In the present invention, the content of ethyl tiglate in the coffee beans is measured according to a measurement method below.

In a test tube, 2 g of the coffee beans are placed, 150 mL of water and 4 mL of hexane are added, the mixture is distilled for 90 minutes in a distillation apparatus for quantification of essential oil, then, a hexane phase is adjusted to a volume of 4 mL, and this is measured to determine the content of ethyl tiglate by gas chromatography-mass spectrometry using a gas chromatography-mass spectrometer below:

### Gas chromatography-mass spectrometer

Model: 7890B/5977B [Agilent Technologies, Inc.]
Column: DB-WAX UI (φ 0.25 mm × 30 m, film thickness 0.25 µm) [Agilent Technologies, Inc.]
Injection method: pulsed split 15:1
Pulse pressure: 25 psi
Pulse time: 0.5 min
Temperature: 220°C at sample inlet
Column: maintained at 40°C for 5 minutes, and the temperature is increased at 10°C/min to 200°C
Gas flow rate: helium (carrier gas) 1 mL/min
Ion source temperature: 230°C
Ionization method: EI
Set mass number: m/z 113.

The coffee beans according to an aspect of the present invention contain 0.1 ppm or more of ethyl tiglate and can provide a flavorful coffee beverage in comparison with coffee beverages in the art.

In addition, the coffee beans according to an aspect of the present invention may contain one or more compounds selected from the group consisting of isobutyl acetate, 2-methylbutyraldehyde, ethyl 2-methylbutyrate, ethyl isovalerate, isoamyl alcohol, and isoamyl acetate in addition to ethyl tiglate.

In an aspect of the present invention, the content of isobutyl acetate contained in the coffee beans may be, for example, from 1 to 3000 ppb, from 1 to 2800 ppb, from 1 to 2600 ppb, from 1 to 2400 ppb, from 1 to 2200 ppb, from 1 to 2000 ppb, from 1 to 1800 ppb, from 1 to 1600 ppb, from 1 to 1400 ppb, from 1 to 1200 ppb, from 1 to 1000 ppb, from 1 to 900 ppb, from 1 to 800 ppb, from 1 to 700 ppb, from 1 to 600 ppb, from 1 to 500 ppb, from 1 to 400 ppb, from 1 to 300 ppb, from 1 to 200 ppb, or from 1 to 100 ppb.

In an aspect of the present invention, the content of 2-methylbutyraldehyde contained in the coffee beans may be, for example, from 1 to 10000 ppb, from 1 to 9000 ppb, from 1 to 8000 ppb, from 1 to 7000 ppb, from 1 to 6000 ppb, from 1 to 5000 ppb, from 1 to 4000 ppb, from 1 to 3000 ppb, from 1 to 2000 ppb, from 1 to 1000 ppb, from 1 to 900 ppb, from 1 to 800 ppb, from 1 to 700 ppb, from 1 to 600 ppb, from 1 to 500 ppb, from 1 to 400 ppb, from 1 to 300 ppb, from 1 to 200 ppb, or from 1 to 100 ppb.

In an aspect of the present invention, the content of ethyl 2-methylbutyrate contained in the coffee beans may be, for example, from 1 to 1000 ppb, from 1 to 900 ppb, from 1 to 800 ppb, from 1 to 700 ppb, from 1 to 600 ppb, from 1 to 500 ppb, from 1 to 400 ppb, from 1 to 300 ppb, from 1 to 200 ppb, from 1 to 100 ppb, from 1 to 90 ppb, from 1 to 80 ppb, from 1 to 70 ppb, from 1 to 60 ppb, from 1 to 50 ppb, from 1 to 40 ppb, from 1 to 30 ppb, from 1 to 20 ppb, or from 1 to 10 ppb.

In an aspect of the present invention, the content of ethyl isovalerate contained in the coffee beans may be, for example, from 1 to 1000 ppb, from 1 to 900 ppb, from 1 to 800 ppb, from 1 to 700 ppb, from 1 to 600 ppb, from 1 to 500 ppb, from 1 to 400 ppb, from 1 to 300 ppb, from 1 to 200 ppb, from 1 to 100 ppb, from 1 to 90 ppb, from 1 to 80 ppb, from 1 to 70 ppb, from 1 to 60 ppb, from 1 to 50 ppb, from 1 to 40 ppb, from 1 to 30 ppb, from 1 to 20 ppb, or from 1 to 10 ppb.

In an aspect of the present invention, the content of isoamyl alcohol contained in the coffee beans may be, for example, from 1 to 10000 ppb, from 1 to 9000 ppb, from 1 to 8000 ppb, from 1 to 7000 ppb, from 1 to 6000 ppb, from 1 to 5000 ppb, from 1 to 4000 ppb, from 1 to 3000 ppb, from 1 to 2000 ppb, from 1 to 1000 ppb, from 1 to 900 ppb, from 1 to 800 ppb, from 1 to 700 ppb, from 1 to 600 ppb, from 1 to 500 ppb, from 1 to 400 ppb, from 1 to 300 ppb, from 1 to 200 ppb, or from 1 to 100 ppb.

In an aspect of the present invention, the content of isoamyl acetate contained in the coffee beans may be, for example, from 1 to 5000 ppb, from 1 to 4000 ppb, from 1 to 3000 ppb, from 1 to 2000 ppb, from 1 to 1000 ppb, from 1 to 900 ppb, from 1 to 800 ppb, from 1 to 700 ppb, from 1 to 600 ppb, from 1 to 500 ppb, from 1 to 400 ppb, from 1 to 300 ppb, from 1 to 200 ppb, or from 1 to 100 ppb.

The contents of isobutyl acetate, 2-methylbutyraldehyde, ethyl 2-methylbutyrate, ethyl isovalerate, isoamyl alcohol, and isoamyl acetate can be measured by a known method using a gas chromatography-mass spectrometer.

### Method for Producing Coffee Beans

A method for producing coffee beans containing 0.1 ppm or more of ethyl tiglate, the method according to an aspect of the present invention, includes:
(i) adding a yeast to raw material beans, in which the raw material beans are coffee cherries, wet parchment obtained by removing outer skin and pulp of coffee cherries, green coffee beans, or a combination of two or more of these; and
(ii) fermenting the raw material beans to which the yeast is added.

The method for producing coffee beans described above produces green coffee beans containing 0.1 ppm or more of ethyl tiglate. In addition, roasting (heat-drying) the green coffee beans produced by the method for producing coffee beans described above produces roasted coffee beans containing 0.1 ppm or more of ethyl tiglate. The production method of an aspect of the present invention produces green coffee beans containing one or more compounds selected from the group consisting of isobutyl acetate, 2-methylbutyraldehyde, ethyl 2-methylbutyrate, ethyl isovalerate, isoamyl alcohol, and isoamyl acetate in addition to ethyl tiglate.

In addition to being obtained by fermentation, the coffee beans containing ethyl tiglate can also be produced by any method, such as immersing coffee beans in a solution containing ethyl tiglate, spraying a solution containing ethyl tiglate on coffee beans, or steaming coffee beans in a solution containing ethyl tiglate. Such any method may be applied to green coffee beans or roasted coffee beans.

The coffee cherries (also referred to as coffee berries) used as the raw material beans are fruits of coffee trees. A coffee cherry is composed of a green coffee bean (seed), pulp (part containing sugars and other nutrients), and outer skin. The varieties include *Arabica, Robusta,* or *Liberica,* and the production areas include Brazil, Ethiopia, Vietnam, and Guatemala. **In** the present invention, the variety and the production area are not limited.

The wet parchment used as the raw material beans is a product after the skin and pulp are removed from the coffee cherries but before the sticky substance (mucilage) attached around the seeds is removed.

The green coffee beans used as the raw material beans are obtained by removing the sticky substance of the wet parchment, drying, and finely selecting and threshing.

In step (i), a yeast is added to the raw material beans, and then these are sufficiently mixed. The mixing may be performed using a device, such as a mixer, or may be performed manually. **In** addition to the yeast, water and/or a culture medium for yeast may be added to the raw material beans.

The yeast is not particularly limited as long as it has an activity of producing ethyl tiglate. Specific examples of the yeast having such an activity include a yeast belonging to one or more selected from the group consisting of the genus *Magnusiomyces* and the genus *Saprochaete.* More specifically, the yeast may be, for example, a yeast selected from the group consisting of *Magnusiomyces magnusii, Magnusiomyces tetraspermus, Saprochaete suaveolens, Saprochaete japonica, Saprochaete gigas, Saprochaete fungicola,* and a combination of two or more of these. The genus *Magnusiomyces* and the genus *Saprochaete* are both known to belong to the family *Dipodascaceae* and to be very closely related.

In step (i), a culture medium suitable for the yeast may be further added. The culture medium contains a carbon source (such as a sugar and/or an organic acid), a nitrogen source (such as a peptone of various types, an extract of various types, an amino acid of various types, and/or an ammonium salt of various types), a mineral, and/or the like as necessary. **In** particular, when green coffee beans are used as the raw material beans, a culture medium simulating the sticky substance (mucilage) is favorably added. Although the culture medium is not limited, as such a culture medium, a culture medium obtained by dissolving and mixing from 20 to 60 g of sucrose, from 15 to 45 g of glucose, from 30 to 90 g of pectin, and from 15 to 45 g of fructose per liter (L) of the culture medium may be used. The amount of the culture medium to be added may be 1 mL or more, 5 mL or more, 10 mL or more, 30 mL or more, 50 mL or more, 100 mL or more, from 1 to 100 mL, from 5 to 100 mL, from 10 to 100 mL, from 30 to 100 mL, or from 50 to 100 mL per 100 g of the raw material beans.

In step (i), 0.01 g or more of isoleucine may be further added per kg of the raw material beans. The amount of isoleucine to be added may be 0.05 g or more, 0.1 g or more, 0.2 g or more, 0.3 g or more, 0.4 g or more, 0.5 g or more, 0.75 g or more, 1.0 g or more, 1.5 g or more, 2.0 g or more, 3.0 g or more, 4.0 g or more, 5.0 g or more, 6.0 g or more, 8.0 g or more, 10 g or more, 12 g or more, 16 g or more, 20 g or more, 24 g or more, 30 g or more, 40 g or more, 50 g or more, 60 g or more, 80 g or more, or 100 g or more per kg of the raw material beans.

In step (i), the amount of isoleucine to be added may be from 0.01 to 100 g, from 0.01 to 80 g, from 0.01 to 60 g, from 0.01 to 50 g, from 0.01 to 40 g, from 0.01 to 30 g, from 0.01 to 24 g, from 0.01 to 20 g, from 0.01 to 16 g, from 0.01 to 12 g, from 0.01 to 10 g, from 0.01 to 8.0 g, from 0.05 to 100 g, from 0.05 to 80 g, from 0.05 to 60 g, from 0.05 to 50 g, from 0.05 to 40 g, from 0.05 to 30 g, from 0.05 to 24 g, from 0.05 to 20 g, from 0.05 to 16 g, from 0.05 to 12 g, from 0.05 to 10 g, from 0.05 to 8.0 g, from 0.1 to 100 g, from 0.1 to 80 g, from 0.1 to 60 g, from 0.1 to 50 g, from 0.1 to 40 g, from 0.1 to 30 g, from 0.1 to 24 g, from 0.1 to 20 g, from 0.1 to 16 g, from 0.1 to 12 g, from 0.1 to 10 g, from 0.1 to 8.0 g, from 0.4 to 100 g, from 0.4 to 80 g, from 0.4 to 60 g, from 0.4 to 50 g, from 0.4 to 40 g, from 0.4 to 30 g, from 0.4 to 24 g, from 0.4 to 20 g, from 0.4 to 16 g, from 0.4 to 12 g, from 0.4 to 10 g, from 0.4 to 8.0 g, from 0.75 to 100 g, from 0.75 to 80 g, from 0.75 to 60 g, from 0.75 to 50 g, from 0.75 to 40 g, from 0.75 to 30 g, from 0.75 to 24 g, from 0.75 to 20 g, from 0.75 to 16 g, from 0.75 to 12 g, from 0.75 to 10 g, from 0.75 to 8.0 g, from 1.0 to 100 g, from 1.0 to 80 g, from 1.0 to 60 g, from 1.0 to 50 g, from 1.0 to 40 g, from 1.0 to 30 g, from 1.0 to 24 g, from 1.0 to 20 g, from 1.0 to 16 g, from 1.0 to 12 g, from 1.0 to 10 g, or from 1.0 to 8.0 g per kg of the raw material beans.

In step (ii), the raw material beans mixed with a yeast and a culture medium suitable for the yeast and/or isoleucine, the culture medium and/or isoleucine to be added as necessary, are placed in a container or a bag and then fermented for 1 hour or more. The fermentation time may be 6 hours or more, 12 hours or more, 24 hours or more, 36 hours or more, 48 hours or more, 60 hours or more, 72 hours or more, 90 hours or more, 100 hours or more, 134 hours or more, 168 hours or more, 200 hours or more, from 1 to 200 hours, from 1 to 168 hours, from 1 to 134 hours, from 1 to 100 hours, from 1 to 90 hours, from 1 to 72 hours, from 1 to 60 hours, from 1 to 48 hours, from 1 to 36 hours, from 1 to 24 hours, from 1 to 12 hours, from 1 to 6 hours, from 6 to 200 hours, from 6 to 168 hours, from 6 to 134 hours, from 6 to 100 hours, from 6 to 90 hours, from 6 to 72 hours, from 6 to 60 hours, from 6 to 48 hours, from 6 to 36 hours, from 6 to 24 hours, from 6 to 12 hours, from 12 to 200 hours, from 12 to 168 hours, from 12 to 134 hours, from 12 to 100 hours, from 12 to 90 hours, from 12 to 72 hours, from 12 to 60 hours, from 12 to 48 hours, from 12 to 36 hours, from 12 to 24 hours, from 24 to 200 hours, from 24 to 168 hours, from 24 to 134 hours, from 24 to 100 hours, from 24 to 90 hours, from 24 to 72 hours, from 24 to 60 hours, from 24 to 48 hours, or from 24 to 36 hours.

The fermentation in step (ii) is not particularly limited as long as the conditions allow fermentation to be carried out, and conditions suitable for fermentation (e.g., such as the type and amount of yeast to be used, the type and amount of assimilable component, temperature, humidity, pH, oxygen concentration, carbon dioxide concentration, and/or fermentation time) may be appropriately set as necessary. The fermentation may be carried out under the atmospheric temperature and atmospheric humidity of the place where the method for producing coffee beans is carried out, or may be carried out in an environment where the temperature and humidity are controlled, such as in a laboratory or factory. The fermentation may be carried out under control of temperature ranging from 5 to 100°C (e.g., such as from 20 to 40°C, from 22 to 34°C, or from 24 to 30°C) and humidity ranging from 5 to 100% (e.g., such as from 30 to 90%, from 40 to 80%, or from 50 to 70%) although the conditions are not limited. The time, temperature, and humidity of the fermentation are appropriately adjusted according to the type of yeast and/or raw material beans to be used. In addition, the fermentation is carried out under atmospheric pressure but may be carried out under reduced pressure or increased pressure.

Examples of the assimilable component to be used in the fermentation in step (ii) include pulp, juice, a sugar, or a culture medium. The pulp is, for example, coffee pulp (a sticky substance (mucilage)) and may be undried or dried. The pulp is not limited to coffee pulp, and another type of pulp, such as grape pulp, cherry pulp, and peach pulp, or any combination of these may be used. The assimilable component other than pulp is a component that can be assimilated by yeast, such as juice (e.g., such as a grape, a peach, or an apple), a sugar (e.g., such as a monosaccharide or a disaccharide, or a polysaccharide obtained from a plant, such as sugarcane or sweet potato), grain (e.g., such as wort made by saccharifying malt), and a culture medium.

The amount of yeast to be used in the present invention is not particularly limited as long as the effect of increasing the ethyl tiglate content is obtained. For example, the yeast may be added in an amount of 1.0 × 10⁴ cells/g to 1.0 × 10¹⁴ cells/g, of 1.0 × 10⁶ cells/g to 1.0 × 10¹² cells/g, or of 1.0 × 10⁸ cells/g to 1.0 × 10¹⁰ cells/g per weight of coffee beans.

When the fermentation is finished, heat sterilization, water washing, drying, roasting, or the like may be freely combined. The drying can be carried out by any method, such as natural drying, drying by sun drying, or drying with a dryer. When a dryer is used in the drying, the fermentation may be finished by drying at any temperature (e.g., from 20 to 70°C, from 30 to 70°C, from 40 to 70°C, or from 50 to 70°C) for about from 1 to 3 days. Furthermore, the fermentation may be carried out according to the fermentation described in a prior patent by the applicant, JP 5032979 B.

The method for producing coffee beans may further include (iii) drying the raw material beans fermented in step (ii). In addition, the method for producing coffee beans may further include (iv) finely selecting and threshing the raw material beans dried in step (iii) to produce coffee beans. Furthermore, the method for producing coffee beans further includes, as necessary, (v) roasting (heat-drying) the beans after being subjected to step (iii) of drying and step (iv) of finely selecting and threshing to produce roasted coffee beans.

The method for producing coffee beans can be carried out in a country where coffee cherries are produced or in a country where coffee beans are consumed. In addition, the method for producing coffee beans may be carried out in a ship or the like during the transportation of coffee beans.

### Coffee Beverage

A coffee beverage according to an aspect of the present invention contains one or more compounds selected from the group consisting of ethyl tiglate, isobutyl acetate, 2-methylbutyraldehyde, ethyl 2-methylbutyrate, ethyl isovalerate, isoamyl alcohol, and isoamyl acetate.

A coffee beverage according to an aspect of the present invention contains all of ethyl tiglate, isobutyl acetate, 2-methylbutyraldehyde, ethyl 2-methylbutyrate, ethyl isovalerate, isoamyl alcohol, and isoamyl acetate.

A coffee beverage according to an aspect of the present invention contains all of ethyl tiglate, isobutyl acetate, ethyl 2-methylbutyrate, ethyl isovalerate, isoamyl alcohol, and isoamyl acetate.

A coffee beverage according to another aspect of the present invention contains ethyl tiglate and one or more compounds selected from the group consisting of isobutyl acetate, 2-methylbutyraldehyde, ethyl 2-methylbutyrate, ethyl isovalerate, isoamyl alcohol, and isoamyl acetate.

A coffee beverage according to yet another aspect of the present invention contains a liquid extract of the coffee beans described in "Coffee Beans" above or the coffee beans obtained by the production method described in "Method for Producing Coffee Beans" above.

In the present specification, the "coffee beverage" refers to a beverage product produced using a coffee component as a raw material. The type of product is not particularly limited, but examples mainly include "coffee", "coffee beverage", and "coffee-containing soft drink", which are defined in the "Fair Competition Rules on Labeling of Coffee Beverages, etc." authorized in Japan in 1977. In addition, among beverages obtained using a coffee component as a raw material, those with a milk solids content of 3.0 mass% or more are treated as "milk beverages" under the "Fair Competition Rules on Labeling of Drinking Milk" in Japan. However, such beverages are included in the coffee beverage in the present invention.

Here, the coffee component refers to a solution containing a component derived from coffee beans, and examples include a liquid coffee extract. In addition, examples of the coffee component also include a solution of coffee powder, such as instant coffee produced by drying a liquid coffee extract, prepared by adjusting to an appropriate amount with water or warm water. In the coffee beverage according to an aspect of the present invention, the coffee component is a liquid extract of the coffee beans described in "Coffee Beans" above or the coffee beans obtained by the production method described in "Method for Producing Coffee Beans" above.

To the coffee beverage according to an aspect of the present invention, a milk component (a component derived from milk), such as milk, cow's milk, or a dairy product, may be added. The coffee beverage to which a milk component is added is also referred to as a milk-containing coffee beverage. For such a milk component, one or more selected from the group consisting of milk, condensed milk, skim milk, reconstituted milk (reconstituted milk reconstituted from whole milk powder, skim milk powder, or formulated milk powder), whey concentrate, concentrated milk, cream, and plant-based milk (such as soy milk or almond milk) can be used. Only one milk component may be used, or two or more may be used in combination. For the milk component, not only a component in liquid form but also a component in powder form may be used.

Ethyl tiglate, isobutyl acetate, 2-methylbutyraldehyde, ethyl 2-methylbutyrate, ethyl isovalerate, isoamyl alcohol, and isoamyl acetate contained in the coffee beverage according to an aspect of the present invention may be derived from fermented coffee beans obtained by fermenting coffee beans with yeast. That is, the coffee beverage according to an aspect of the present invention uses fermented coffee beans as a raw material. The yeast used in the fermentation and the fermentation conditions are as described in "Method for Producing Coffee Beans" above.

In addition, the coffee beverage according to another aspect of the present invention may be a coffee beverage to which as ethyl tiglate, isobutyl acetate, 2-methylbutyraldehyde, ethyl 2-methylbutyrate, ethyl isovalerate, isoamyl alcohol, and isoamyl acetate, a purified product of these compounds is added.

Furthermore, the coffee beverage according to yet another aspect of the present invention may be a coffee beverage containing both of those derived from fermented coffee beans and those derived from a purified product as ethyl tiglate, isobutyl acetate, 2-methylbutyraldehyde, ethyl 2-methylbutyrate, ethyl isovalerate, isoamyl alcohol, and isoamyl acetate.

In an aspect of the present invention, the content of ethyl tiglate contained in the coffee beverage may be, for example, from 1 to 1000 ppb, from 1 to 900 ppb, from 1 to 800 ppb, from 1 to 700 ppb, from 1 to 600 ppb, from 1 to 500 ppb, from 1 to 400 ppb, from 1 to 300 ppb, from 1 to 200 ppb, from 1 to 100 ppb, from 1 to 90 ppb, from 1 to 80 ppb, from 1 to 70 ppb, from 1 to 60 ppb, from 1 to 50 ppb, from 1 to 40 ppb, from 1 to 30 ppb, from 1 to 20 ppb, or from 1 to 10 ppb.

In another aspect of the present invention, the content of ethyl tiglate contained in the coffee beverage may be, for example, from 5 to 5000 ppb, from 5 to 4500 ppb, from 5 to 4000 ppb, from 5 to 3500 ppb, from 5 to 3000 ppb, from 5 to 2500 ppb, from 5 to 2000 ppb, from 5 to 1500 ppb, from 5 to 1000 ppb, from 10 to 5000 ppb, from 10 to 4500 ppb, from 10 to 4000 ppb, from 10 to 3500 ppb, from 10 to 3000 ppb, from 10 to 2500 ppb, from 10 to 2000 ppb, from 10 to 1500 ppb, from 10 to 1000 ppb, from 15 to 5000 ppb, from 15 to 4500 ppb, from 15 to 4000 ppb, from 15 to 3500 ppb, from 15 to 3000 ppb, from 15 to 2500 ppb, from 15 to 2000 ppb, from 15 to 1500 ppb, from 15 to 1000 ppb, from 20 to 5000 ppb, from 20 to 4500 ppb, from 20 to 4000 ppb, from 20 to 3500 ppb, from 20 to 3000 ppb, from 20 to 2500 ppb, from 20 to 2000 ppb, from 20 to 1500 ppb, from 20 to 1000 ppb, from 25 to 5000 ppb, from 25 to 4500 ppb, from 25 to 4000 ppb, from 25 to 3500 ppb, from 25 to 3000 ppb, from 25 to 2500 ppb, from 25 to 2000 ppb, from 25 to 1500 ppb, or from 25 to 1000 ppb.

In yet another aspect of the present invention, the content of ethyl tiglate contained in the coffee beverage may be, for example, from 5 to 900 ppb, from 50 to 800 ppb, from 100 to 700 ppb, or from 200 to 600 ppb.

In an aspect of the present invention, the content of isobutyl acetate contained in the coffee beverage may be, for example, from 1 to 3000 ppb, from 1 to 2800 ppb, from 1 to 2600 ppb, from 1 to 2400 ppb, from 1 to 2200 ppb, from 1 to 2000 ppb, from 1 to 1800 ppb, from 1 to 1600 ppb, from 1 to 1400 ppb, from 1 to 1200 ppb, from 1 to 1000 ppb, from 1 to 900 ppb, from 1 to 800 ppb, from 1 to 700 ppb, from 1 to 600 ppb, from 1 to 500 ppb, from 1 to 400 ppb, from 1 to 300 ppb, from 1 to 200 ppb, or from 1 to 100 ppb.

In another aspect of the present invention, the content of isobutyl acetate contained in the coffee beverage may be, for example, from 5 to 5000 ppb, from 5 to 4500 ppb, from 5 to 4000 ppb, from 5 to 3500 ppb, from 5 to 3000 ppb, from 5 to 2500 ppb, from 10 to 5000 ppb, from 10 to 4500 ppb, from 10 to 4000 ppb, from 10 to 3500 ppb, from 10 to 3000 ppb, from 10 to 2500 ppb, from 20 to 5000 ppb, from 20 to 4500 ppb, from 20 to 4000 ppb, from 20 to 3500 ppb, from 20 to 3000 ppb, from 20 to 2500 ppb, from 30 to 5000 ppb, from 30 to 4500 ppb, from 30 to 4000 ppb, from 30 to 3500 ppb, from 30 to 3000 ppb, from 30 to 2500 ppb, from 40 to 5000 ppb, from 40 to 4500 ppb, from 40 to 4000 ppb, from 40 to 3500 ppb, from 40 to 3000 ppb, from 40 to 2500 ppb, from 50 to 5000 ppb, from 50 to 4500 ppb, from 50 to 4000 ppb, from 50 to 3500 ppb, from 50 to 3000 ppb, or from 50 to 2500 ppb.

In yet another aspect of the present invention, the content of isobutyl acetate contained in the coffee beverage may be, for example, from 5 to 2000 ppb, from 50 to 1500 ppb, from 100 to 1000 ppb, or from 200 to 800 ppb.

In an aspect of the present invention, the content of 2-methylbutyraldehyde contained in the coffee beverage may be, for example, from 1 to 10000 ppb, from 1 to 9000 ppb, from 1 to 8000 ppb, from 1 to 7000 ppb, from 1 to 6000 ppb, from 1 to 5000 ppb, from 1 to 4000 ppb, from 1 to 3000 ppb, from 1 to 2000 ppb, from 1 to 1000 ppb, from 1 to 900 ppb, from 1 to 800 ppb, from 1 to 700 ppb, from 1 to 600 ppb, from 1 to 500 ppb, from 1 to 400 ppb, from 1 to 300 ppb, from 1 to 200 ppb, or from 1 to 100 ppb.

In an aspect of the present invention, the content of ethyl 2-methylbutyrate contained in the coffee beverage may be, for example, from 1 to 1000 ppb, from 1 to 900 ppb, from 1 to 800 ppb, from 1 to 700 ppb, from 1 to 600 ppb, from 1 to 500 ppb, from 1 to 400 ppb, from 1 to 300 ppb, from 1 to 200 ppb, from 1 to 100 ppb, from 1 to 90 ppb, from 1 to 80 ppb, from 1 to 70 ppb, from 1 to 60 ppb, from 1 to 50 ppb, from 1 to 40 ppb, from 1 to 30 ppb, from 1 to 20 ppb, or from 1 to 10 ppb.

In another aspect of the present invention, the content of ethyl 2-methylbutyrate contained in the coffee beverage may be, for example, from 1 to 5000 ppb, from 1 to 4500 ppb, from 1 to 4000 ppb, from 1 to 3500 ppb, from 1 to 3000 ppb, from 2 to 5000 ppb, from 2 to 4500 ppb, from 2 to 4000 ppb, from 2 to 3500 ppb, from 2 to 3000 ppb, from 3 to 5000 ppb, from 3 to 4500 ppb, from 3 to 4000 ppb, from 3 to 3500 ppb, from 3 to 3000 ppb, from 4 to 5000 ppb, from 4 to 4500 ppb, from 4 to 4000 ppb, from 4 to 3500 ppb, from 4 to 3000 ppb, from 5 to 5000 ppb, from 5 to 4500 ppb, from 5 to 4000 ppb, from 5 to 3500 ppb, or from 5 to 3000 ppb.

In yet another aspect of the present invention, the content of ethyl 2-methylbutyrate contained in the coffee beverage may be, for example, from 5 to 2000 ppb, from 10 to 1500 ppb, from 15 to 1000 ppb, from 20 to 500 ppb, or from 25 to 100 ppb.

In an aspect of the present invention, the content of ethyl isovalerate contained in the coffee beverage may be, for example, from 1 to 1000 ppb, from 1 to 900 ppb, from 1 to 800 ppb, from 1 to 700 ppb, from 1 to 600 ppb, from 1 to 500 ppb, from 1 to 400 ppb, from 1 to 300 ppb, from 1 to 200 ppb, from 1 to 100 ppb, from 1 to 90 ppb, from 1 to 80 ppb, from 1 to 70 ppb, from 1 to 60 ppb, from 1 to 50 ppb, from 1 to 40 ppb, from 1 to 30 ppb, from 1 to 20 ppb, or from 1 to 10 ppb.

In another aspect of the present invention, the content of ethyl isovalerate contained in the coffee beverage may be, for example, from 5 to 5000 ppb, from 5 to 4500 ppb, from 5 to 4000 ppb, from 5 to 3500 ppb, from 5 to 3000 ppb, from 5 to 2500 ppb, from 10 to 5000 ppb, from 10 to 4500 ppb, from 10 to 4000 ppb, from 10 to 3500 ppb, from 10 to 3000 ppb, from 10 to 2500 ppb, from 20 to 5000 ppb, from 20 to 4500 ppb, from 20 to 4000 ppb, from 20 to 3500 ppb, from 20 to 3000 ppb, from 20 to 2500 ppb, from 30 to 5000 ppb, from 30 to 4500 ppb, from 30 to 4000 ppb, from 30 to 3500 ppb, from 30 to 3000 ppb, from 30 to 2500 ppb, from 40 to 5000 ppb, from 40 to 4500 ppb, from 40 to 4000 ppb, from 40 to 3500 ppb, from 40 to 3000 ppb, from 40 to 2500 ppb, from 50 to 5000 ppb, from 50 to 4500 ppb, from 50 to 4000 ppb, from 50 to 3500 ppb, from 50 to 3000 ppb, or from 50 to 2500 ppb. In yet another aspect of the present invention, the content of ethyl isovalerate contained in the coffee beverage may be, for example, from 5 to 2000 ppb, from 50 to 1500 ppb, from 100 to 1000 ppb, or from 200 to 800 ppb.

In an aspect of the present invention, the content of isoamyl alcohol contained in the coffee beverage may be, for example, from 1 to 10000 ppb, from 1 to 9000 ppb, from 1 to 8000 ppb, from 1 to 7000 ppb, from 1 to 6000 ppb, from 1 to 5000 ppb, from 1 to 4000 ppb, from 1 to 3000 ppb, from 1 to 2000 ppb, from 1 to 1000 ppb, from 1 to 900 ppb, from 1 to 800 ppb, from 1 to 700 ppb, from 1 to 600 ppb, from 1 to 500 ppb, from 1 to 400 ppb, from 1 to 300 ppb, from 1 to 200 ppb, or from 1 to 100 ppb.

In another aspect of the present invention, the content of isoamyl alcohol contained in the coffee beverage may be, for example, from 100 to 20000 ppb, from 100 to 17500 ppb, from 100 to 15000 ppb, from 100 to 12500 ppb, from 100 to 10000 ppb, from 500 to 20000 ppb, from 500 to 17500 ppb, from 500 to 15000 ppb, from 500 to 12500 ppb, from 500 to 10000 ppb, from 600 to 20000 ppb, from 600 to 17500 ppb, from 600 to 15000 ppb, from 600 to 12500 ppb, from 600 to 10000 ppb, from 700 to 20000 ppb, from 700 to 17500 ppb, from 700 to 15000 ppb, from 700 to 12500 ppb, from 700 to 10000 ppb, from 800 to 20000 ppb, from 800 to 17500 ppb, from 800 to 15000 ppb, from 800 to 12500 ppb, from 800 to 10000 ppb, from 900 to 20000 ppb, from 900 to 17500 ppb, from 900 to 15000 ppb, from 900 to 12500 ppb, from 900 to 10000 ppb, from 1000 to 20000 ppb, from 1000 to 17500 ppb, from 1000 to 15000 ppb, from 1000 to 12500 ppb, or from 1000 to 10000 ppb.

In yet another aspect of the present invention, the content of isoamyl alcohol contained in the coffee beverage may be, for example, from 100 to 10000 ppb, from 500 to 9000 ppb, from 1000 to 7000 ppb, from 2000 to 6500 ppb, or from 3000 to 6000 ppb.

In an aspect of the present invention, the content of isoamyl acetate contained in the coffee beverage may be, for example, from 1 to 5000 ppb, from 1 to 4000 ppb, from 1 to 3000 ppb, from 1 to 2000 ppb, from 1 to 1000 ppb, from 1 to 900 ppb, from 1 to 800 ppb, from 1 to 700 ppb, from 1 to 600 ppb, from 1 to 500 ppb, from 1 to 400 ppb, from 1 to 300 ppb, from 1 to 200 ppb, or from 1 to 100 ppb.

In another aspect of the present invention, the content of isoamyl acetate contained in the coffee beverage may be, for example, from 5 to 1000 ppb, from 5 to 900 ppb, from 5 to 800 ppb, from 5 to 700 ppb, from 5 to 600 ppb, from 5 to 500 ppb, from 5 to 400 ppb, from 5 to 300 ppb, from 10 to 1000 ppb, from 10 to 900 ppb, from 10 to 800 ppb, from 10 to 700 ppb, from 10 to 600 ppb, from 10 to 500 ppb, from 10 to 400 ppb, from 10 to 300 ppb, from 15 to 1000 ppb, from 15 to 900 ppb, from 15 to 800 ppb, from 15 to 700 ppb, from 15 to 600 ppb, from 15 to 500 ppb, from 15 to 400 ppb, from 15 to 300 ppb, from 20 to 1000 ppb, from 20 to 900 ppb, from 20 to 800 ppb, from 20 to 700 ppb, from 20 to 600 ppb, from 20 to 500 ppb, from 20 to 400 ppb, or from 20 to 300 ppb.

In yet another aspect of the present invention, the content of isoamyl acetate contained in the coffee beverage may be, for example, from 5 to 200 ppb, from 15 to 150 ppb, from 20 to 100 ppb, or from 25 to 80 ppb.

The contents of ethyl tiglate, isobutyl acetate, 2-methylbutyraldehyde, ethyl 2-methylbutyrate, ethyl isovalerate, isoamyl alcohol, and isoamyl acetate can be measured by a known method using a gas chromatography-mass spectrometer.

In an aspect of the present invention, the Brix (%) of the coffee beverage may be from 1.0 to 10, from 1.0 to 5.0, from 1.0 to 4.0, from 1.0 to 3.0, from 1.0 to 2.7, or from 1.0 to 2.5.

The coffee beverage may contain a pH adjuster. Examples of the pH adjuster include sodium hydrogen carbonate, carbon dioxide, succinic acid, gluconic acid, citric acid, trisodium citrate, phosphoric acid, lactic acid, sodium hydroxide, and/or salts of these. In an aspect of the present invention, the pH of the coffee beverage may be from 5.0 to 7.5, from 5.0 to 7.0, from 5.0 to 6.5, or from 5.0 to 6.0.

In addition, the coffee beverage may contain an additive of various types in addition to the pH adjuster. Examples of such an additive include antioxidants (such as sodium erythorbate), emulsifiers (sucrose fatty acid esters, sorbitan fatty acid esters, and polyglycerol fatty acid esters), acidulants (such as phosphoric acid, citric acid, and malic acid), and flavorings.

The form of the coffee beverage of the present invention is not limited and may be, for example, a form of a packaged coffee beverage in which the coffee beverage is enclosed and packaged in a container, such as a can, a bottle, a paper container, or a PET bottle. The method for producing the coffee beverage is not particularly limited, and the coffee beverage can be produced by a known method. In addition, in the case of making the coffee beverage into a packaged beverage, the method for producing a coffee beverage of the present invention includes filling the coffee beverage in a container. Furthermore, in the case of making a packaged beverage, the coffee beverage is sterilized before or after filled in a container, which allows long-term storage and thus is preferred. For example, in the case of making a canned coffee beverage, a predetermined amount of the coffee beverage is filled in a can and can be heat-sterilized, for example, by retort sterilization at 120 to 125°C for about 5 to 20 minutes. Moreover, in the case of making the coffee beverage into a PET bottle beverage, a paper packaging beverage, or a bottled beverage, a packaged beverage can be obtained, for example, by performing UHT sterilization at a temperature of 130 to 145°C for about 2 to 120 seconds and then hot-pack filling a predetermined amount or aseptically filling a predetermined amount at low temperature.

### Examples

### Test Example 1: Coffee Beans Containing Ethyl Tiglate

### Examples 1 to 11

In Examples 1 to 11 of the present invention and Comparative Examples 1 and 2, green coffee beans (GB) were used as the raw material beans. The green coffee beans (GB) were produced in Brazil from coffee cherries (CC) produced in a farm in Brazil, and the green coffee beans (GB) were imported to Japan.

A basal culture medium simulating the sugar composition of mucilage was prepared and used as the culture medium (see "Coffee - Growing, Processing, Sustainable Production: A Guidebook for Growers, Processors, Traders and Researchers (Paperback)"). The basal culture medium was prepared by dissolving 40 g of sucrose, 30 g of glucose, 66 g of pectin, and 30 g of fructose per 1 liter (L) of water.

In Examples 1 to 11 and Comparative Examples 1 and 2, a yeast shown in Table 1, isoleucine in the amount shown in Table 1, and the basal culture medium (50 mL per 100 g of the raw material beans) were added to the green coffee beans (GB) used as the raw material beans, and mixed. The mixture was then placed in a plastic bag and allowed to stand.

The amounts of the yeast added were all the same value (1.0 × 10⁴ cells/g) in each of Examples 1 to 11 and Comparative Examples 1 and 2.

The raw material beans contained in the plastic bag to which the yeast, isoleucine, and the culture medium were added were fermented for the time described in Table 1. This fermentation was carried out at a controlled temperature of 28°C and under atmospheric pressure and atmospheric humidity in a laboratory in Japan. The conditions were the same in all of Examples 1 to 11 and Comparative Examples 1 and 2 except for the fermentation time.

After the fermentation, the fermented raw material beans were subjected to drying, and green coffee beans were produced. The drying was performed under the same conditions in all of Examples 1 to 11 and Comparative Examples 1 and 2.

Furthermore, after the drying, the resulting green coffee beans were roasted, and roasted coffee beans were produced. The roasting was performed under the same conditions in all of Examples 1 to 11 and Comparative Examples 1 and 2.

The contents of ethyl tiglate contained in the green coffee beans and the roasted coffee beans were measured by a method below.

### Measurement Method of Ethyl Tiglate Concentration (Content)

In a test tube, 2 g of the coffee beans are placed, 150 mL of water and 4 mL of hexane are added, the mixture is distilled for 90 minutes in a distillation apparatus for quantification of essential oil, then, a hexane phase is adjusted to a volume of 4 mL, and this is measured to determine the content of ethyl tiglate by gas chromatography-mass spectrometry using a gas chromatography-mass spectrometer below:

### Gas chromatography-mass spectrometer

Model: 7890B/5977B [Agilent Technologies, Inc.]
Column: DB-WAX UI (φ 0.25 mm × 30 m, film thickness 0.25 µm) [Agilent Technologies, Inc.]
Injection method: pulsed split 15:1
Pulse pressure: 25 psi
Pulse time: 0.5 min
Temperature: 220°C at sample inlet
Column: maintained at 40°C for 5 minutes, and the temperature is increased at 10°C/min to 200°C
Gas flow rate: helium (carrier gas) 1 mL/min
Ion source temperature: 230°C
Ionization method: EI
Set mass number: m/z 113.

The measurement results of the content of ethyl tiglate for each of the green coffee beans and the roasted coffee beans of Examples 1 to 11 and Comparative Examples 1 and 2 are shown in Table 1.

### [Table 1]

**Table 1**

| | Yeast | Strain No. | Amount of isoleucine added (g/kg of raw material beans) | Culture medium (addition amount per 100 g of raw material beans) | Fermentation time (hours) | Green coffee beans Ethyl tiglate concentration (ppm) | Roasted Coffee Beans Ethyl tiglate concentration (ppm) |
|---|---|---|---|---|---|---|---|
| Example 1 | *Saprochaete suaveolens* | NBRC10835 | 1 | Basal culture medium 50 mL/100 g | 24 | 1.5 | 1.7 |
| Example 2 | *Saprochaete suaveolens* | NBRC10835 | 1 | Basal culture medium 50 mL/100 g | 72 | 3.8 | 4.3 |
| Example 3 | *Saprochaete suaveolens* | NBRC10835 | 1 | Basal culture medium 50 mL/100 g | 168 | 19 | 22.0 |
| Example 4 | *Saprochaete suaveolens* | NBRC10835 | 0 | Basal culture medium 50 mL/100 g | 24 | 0.2 | 0.2 |
| Example 5 | *Saprochaete suaveolens* | NBRC10835 | 0 | Basal culture medium 50 mL/100 g | 72 | 0.8 | 0.9 |
| Example 6 | *Saprochaete suaveolens* | NBRC10835 | 0 | Basal culture medium 50 mL/100 g | 168 | 1.7 | 1.9 |
| Example 7 | *Saprochaete suaveolens* | NBRC105322 | 1 | Basal culture medium 50 mL/100 g | 96 | N/A | 23.6 |
| Example 8 | *Saprochaete suaveolens* | NBRC105322 | 0 | Basal culture medium 50 mL/100 g | 96 | N/A | 10.1 |
| Example 9 | *Saprochaete suaveolens* | JCM2450 | 1 | Basal culture medium 50 mL/100 g | 96 | N/A | 2.7 |
| Example 10 | *Magnusiomyces magnusii* | JCM6868 | 1 | Basal culture medium 50 mL/100 g | 96 | N/A | 1.0 |
| Example 11 | *Magnusiomyces magnusii* | JCM6869 | 1 | Basal culture medium 50 mL/100 g | 96 | N/A | 0.3 |
| Comparative Example 1 | *Saccharomyces cerevisiae* | EC1118 | 0 | Basal culture medium 50 mL/100 g | 72 | Not detected | Not detected |
| Comparative Example 2 | *Saccharomyces cerevisiae* | EC1118 | 1 | Basal culture medium 50 mL/100 g | 72 | Not detected | Not detected |

| | | | | | | | |
|---|---|---|---|---|---|---|---|
| (Note 1) In the table, "N/A" indicates being not measured. (Note 2) In the table, "not detected" indicates that the ethyl tiglate concentration is less than 0.1 ppm. (Note 3) "EC1118" in Comparative Examples 1 and 2 was available from Lallemand Inc. | | | | | | | |

As shown in Table 1, the coffee beans according to Examples 1 to 11 had an ethyl tiglate concentration (content) of about 0.2 to about 23 ppm. On the other hand, in the coffee beans according to Comparative Examples 1 and 2, the content of ethyl tiglate was not detected (less than 0.1 ppm). The ethyl tiglate concentration in the roasted coffee beans was measured for the purpose of showing that the ethyl tiglate concentration in the green coffee beans is not reduced by the roasting.

The coffee beans of Examples 1 to 11 thus abundantly contained ethyl tiglate, which was not detected from the coffee beans of Comparative Examples 1 and 2.

### Comparative Examples 3 to 15

In Comparative Examples 3 to 15, commercially available green coffee beans were purchased, and the contents of ethyl tiglate contained in the commercially available green coffee beans were measured by the measurement method described above.

### [Table 2]

**Table 2**

| | Product name of green coffee beans | Ethyl tiglate concentration in green coffee beans (ppm) |
|---|---|---|
| Comparative Example 3 | Guatemala SHB | Not detected |
| Comparative Example 4 | Columbia Supremo | Not detected |
| Comparative Example 5 | Ethiopia Guji | Not detected |
| Comparative Example 6 | Vietnam Robusta | Not detected |
| Comparative Example 7 | Columbia Huila Area | Not detected |
| Comparative Example 8 | Columbia Alto Del Obispo La Esperanza Farm (Caturra) | Not detected |
| Comparative Example 9 | Indonesia Aceh Alur Badak | Not detected |
| Comparative Example 10 | Costa Rica Herbazu Leoncio Black Honey | Not detected |
| Comparative Example 11 | Kenya Kariaini AB | Not detected |
| Comparative Example 12 | El Salvador Carmen Geisha Anaerobic Raisin Natural Light Roast | Not detected |
| Comparative Example 13 | Colombia El Paraiso Double Anaerobic Lychee Light Roast | Not detected |
| Comparative Example 14 | China Yunnan Anaerobic DF Winy Natural Middle Roast | Not detected |
| Comparative Example 15 | Thailand Bean Spire Typica Anaerobic Natural Middle Roast | Not detected |

From the commercially available green coffee beans according to Comparative Examples 3 to 15, ethyl tiglate was not detected (less than 0.1 ppm).

### Test Example 2: Sensory Evaluation of Coffee Beverage (Coffee Bean Liquid Extract)

### Examples 12 to 15 and Comparative Example 16

Two types of roasted coffee beans, roasted coffee beans produced in accordance with the method described in Test Example 1 ("fermented beans", L value = 22) and roasted coffee beans produced in Brazil ("Brazil", L value = 20), were ground and blended in the proportions shown in Table 3. Then, extraction was performed with hot water (94°C) in an amount of 10 times the weight of the roasted coffee beans using a coffee extractor. The resulting liquid extract was diluted to a coffee solid content of about 13.0 g/L, and this was used as a sample for sensory evaluation.

The contents of various aroma components, such as ethyl tiglate, contained in the liquid coffee extract were measured by the following method using a headspace-SPME-gas chromatography-mass spectrometer.

### Measurement Method of aroma component concentration (content)

The contents of aroma components in the liquid coffee extract were measured by gas chromatography-mass spectrometry using a gas chromatography-mass spectrometer below. For the SPME fiber, 50/30 µm divinylbenzene-carboxen-polydimethylsiloxane (DVB/CAR/PDMS) fiber (Supelco, Merck KGaA, Bellefonte, PA, USA) was used. In a 20-mL vial, 8 mL of the liquid coffee extract and 100 µL of 40 mg/L cyclohexanol as an internal standard were introduced. After incubating the vial at 45°C for 20 minutes, the fiber was inserted into the headspace of the vial and incubated at 45°C for 40 minutes.

### Gas chromatography-mass spectrometer

Model: PAL3, 7890B, 5977B [Agilent Technologies, Inc.]
Column: DB-WAX (φ 0.25 mm × 60 m, film thickness 0.25 µm) [Agilent Technologies, Inc.]
Injection method: splitless
Pulse pressure: 16.1 psi
Temperature: 150°C at sample inlet
Column: the column temperature is maintained at 40°C for 2 minutes, increased at 5°C/min to 230°C, and then maintained for 2 minutes.
Gas flow rate: helium (carrier gas) 1 mL/min
Ion source temperature: 230°C
Ionization method: EI

### Set mass number

m/z 113 (ethyl tiglate)
m/z 56 (isobutyl acetate)
m/z 102 (ethyl 2-methylbutyrate)
m/z 85 (ethyl isovalerate (ethyl 3-methylbutyrate))
m/z 70 (isoamyl acetate)
m/z 55 (isoamyl alcohol)

### Sensory Evaluation

Ten trained expert panels performed sensory evaluation on the samples prepared as described above. Based on the sample of Comparative Example 16 (control sample), each panel evaluated whether each prepared sample was improved in three evaluation items of "bean-derived earthy odor unsuitable for a coffee beverage", "odd taste unsuitable for a coffee beverage", and "richness of aroma suitable for a coffee beverage" in comparison with the result (score: 1 point) of Comparative Example 16. The rating of each sample in the table was given based on the evaluation results by 10 panels according to the following criteria.

· 5 points: All (10 panels) of the panels perceived an improvement compared to the control sample.
· 4 points: More than half (from 7 to 9 panels) of the panels perceived an improvement compared to the control sample.
· 3 points: About half (5 or 6 panels) of the panels perceived an improvement compared to the control sample.
· 2 points: Less than half (from 2 to 4 panels) of the panels perceived an improvement compared to the control sample.
· 1 point: 0 or 1 panel of the panels perceived an improvement compared to the control sample.

### [Table 3]

**Table 3**

| | | Comparative Example 16 | Example 12 | Example 13 | Example 14 | Example 15 |
|---|---|---|---|---|---|---|
| Roasted coffee beans | Brazil | 100% | 95% | 70% | 40% | 5% |
| | Fermented beans | 0% | 5% | 30% | 60% | 95% |
| Aroma component concentration (ppb) | Ethyl tiglate | 0.3 | 1.5 | 7.2 | 14.1 | 22.2 |
| | Isobutyl acetate | 2.2 | 5.1 | 19.8 | 37.3 | 57.8 |
| | Ethyl 2-methylbutyrate | 2.5 | 13.0 | 65.8 | 129.0 | 202.9 |
| | Ethyl isovalerate | 3.4 | 16.8 | 84.0 | 164.6 | 258.7 |
| | Isoamyl alcohol | 39.5 | 55.3 | 134.4 | 229.3 | 340.0 |
| | Isoamyl acetate | 1.5 | 12.3 | 66.3 | 131.2 | 206.8 |
| Sensory evaluation | Bean-derived earthy odor unsuitable for coffee beverage | 1 | 2 | 5 | 5 | 5 |
| | Odd taste unsuitable for coffee beverage | 1 | 3 | 5 | 5 | 5 |
| | Richness of aroma suitable for coffee beverage | 1 | 2 | 5 | 4 | 4 |

### Test Example 3: Sensory Evaluation of Coffee Beverage (Sterilized Coffee Bean Liquid Extract)

### Examples 12 to 15 and Comparative Example 16

Sodium bicarbonate was added to each liquid coffee extract prepared in Test Example 2 so as to have a concentration of 0.5 g/L. In a can, 185 g of the resulting sample was filled, and retort sterilization was performed at F0 = 4 or more, and a sample for sensory evaluation was obtained.

The contents of various aroma components, such as ethyl tiglate, contained in the sterilized liquid coffee extract were measured in the same manner as in Test Example 2. In addition, the method of sensory evaluation was also the same as in Test Example 2. The results are shown in Table 4.

### [Table 4]

**Table 4**

| | | Comparative Example 16 | Example 12 | Example 13 | Example 14 | Example 15 |
|---|---|---|---|---|---|---|
| Roasted coffee beans | Brazil | 100% | 95% | 70% | 40% | 5% |
| | Fermented beans | 0% | 5% | 30% | 60% | 95% |
| Aroma component concentration (ppb) | Ethyl tiglate | 0.1 | 1.2 | 6.7 | 13.4 | 21.1 |
| | Isobutyl acetate | 2.1 | 12.6 | 65.4 | 128.6 | 202.5 |
| | Ethyl 2-methylbutyrate | 2.6 | 13.0 | 64.7 | 126.9 | 199.3 |
| | Ethyl isovalerate | 3.5 | 16.7 | 82.8 | 162.1 | 254.7 |
| | Isoamyl alcohol | 89.2 | 103.0 | 171.7 | 254.3 | 350.5 |
| | Isoamyl acetate | 0.3 | 1.0 | 4.6 | 8.8 | 13.8 |
| Sensory evaluation | Bean-derived earthy odor unsuitable for coffee beverage | 1 | 2 | 5 | 5 | 5 |
| | Odd taste unsuitable for coffee beverage | 1 | 3 | 4 | 5 | 5 |
| | Richness of aroma suitable for coffee beverage | 1 | 3 | 4 | 5 | 4 |

### Test Example 4: Sensory Evaluation of Coffee Beverage (Sterilized Coffee Bean Liquid Extract with Aroma Component Externally Added)

### Examples 16 to 48 and Comparative Example 16

Roasted coffee beans produced in Brazil ("Brazil", L value = 20) were ground, and extraction was performed with hot water (94°C) in an amount of 10 times the weight of the roasted coffee beans using a coffee extractor. The resulting liquid extract was diluted to a coffee solid content of about 13.0 g/L, and sodium bicarbonate was added to a concentration of 0.5 g/L. In a can, 185 g of the resulting sample was filled, and retort sterilization was performed at F0 = 4 or more. To this sterilized coffee bean liquid extract, each standard product (purified product) of various aroma components shown in Tables 5 to 8 was added to give a concentration shown in Tables 5 to 8, and a sample for sensory evaluation was obtained. The method of sensory evaluation was the same as in Test Example 2. The results are shown in Tables 5 to 8.

### [Table 5]

**Table 5**

| | | Comparative Example 16 | Example 16 | Example 17 | Example 18 | Example 19 | Example 20 | Example 21 | Example 22 | Example 23 | Example 24 |
|---|---|---|---|---|---|---|---|---|---|---|---|
| | | | Adjusted ethyl tiglate concentration | | | Adjusted isobutyl acetate concentration | | | Adjusted ethyl 2-methylbutyrate concentration | | |
| Aroma component concentration (ppb) | Ethyl tiglate | 0.1 | 5000.1 | 500.1 | 5.1 | 0.1 | 0.1 | 0.1 | 0.1 | 0.1 | 0.1 |
| | Isobutyl acetate | 2.1 | 2.1 | 2.1 | 2.1 | 5002.1 | 502.1 | 7.1 | 2.1 | 2.1 | 2.1 |
| | Ethyl 2-methylbutyrate | 2.6 | 2.6 | 2.6 | 2.6 | 2.6 | 2.6 | 2.6 | 5002.6 | 52.6 | 3.6 |
| | Ethyl isovalerate | 3.5 | 3.5 | 3.5 | 3.5 | 3.5 | 3.5 | 3.5 | 3.5 | 3.5 | 3.5 |
| | Isoamyl alcohol | 89.2 | 89.2 | 89.2 | 89.2 | 89.2 | 89.2 | 89.2 | 89.2 | 89.2 | 89.2 |
| | Isoamyl acetate | 0.3 | 0.3 | 0.3 | 0.3 | 0.3 | 0.3 | 0.3 | 0.3 | 0.3 | 0.3 |
| Sensory evaluation | Bean-derived earthy odor unsuitable for coffee beverage | 1 | 3 | 4 | 3 | 2 | 3 | 2 | 3 | 3 | 3 |
| | Odd taste unsuitable for coffee beverage | 1 | 3 | 4 | 3 | 2 | 3 | 3 | 2 | 3 | 2 |
| | Richness of aroma suitable for coffee beverage | 1 | 4 | 5 | 3 | 3 | 4 | 4 | 3 | 4 | 4 |

### [Table 6]

**Table 6**

| | | Example 25 | Example 26 | Example 27 | Example 28 | Example 29 | Example 30 | Example 31 | Example 32 | Example 33 |
|---|---|---|---|---|---|---|---|---|---|---|
| | | Adjusted ethyl isovalerate concentration | | | Adjusted isoamyl alcohol concentration | | | Adjusted isoamyl acetate concentration | | |
| Aroma component concentration (ppb) | Ethyl tiglate | 0.1 | 0.1 | 0.1 | 0.1 | 0.1 | 0.1 | 0.1 | 0.1 | 0.1 |
| | Isobutyl acetate | 2.1 | 2.1 | 2.1 | 2.1 | 2.1 | 2.1 | 2.1 | 2.1 | 2.1 |
| | Ethyl 2-methylbutyrate | 2.6 | 2.6 | 2.6 | 2.6 | 2.6 | 2.6 | 2.6 | 2.6 | 2.6 |
| | Ethyl isovalerate | 5003.5 | 503.5 | 8.5 | 3.5 | 3.5 | 3.5 | 3.5 | 3.5 | 3.5 |
| | Isoamyl alcohol | 89.2 | 89.2 | 89.2 | 20089.2 | 5089.2 | 589.2 | 89.2 | 89.2 | 89.2 |
| | Isoamyl acetate | 0.3 | 0.3 | 0.3 | 0.3 | 0.3 | 0.3 | 500.3 | 50.3 | 5.3 |
| Sensory evaluation | Bean-derived earthy odor unsuitable for coffee beverage | 2 | 2 | 2 | 3 | 3 | 2 | 2 | 2 | 2 |
| | Odd taste unsuitable for coffee beverage | 1 | 2 | 1 | 3 | 4 | 2 | 2 | 2 | 2 |
| | Richness of aroma suitable for coffee beverage | 3 | 4 | 3 | 4 | 5 | 4 | 3 | 4 | 5 |

**[Table 7]**

| Table 7: Ethyl tiglate concentration fixed at about 500 ppb | | | | | | | | | | |
|---|---|---|---|---|---|---|---|---|---|---|
| | | Example 34 | Example 35 | Example 36 | Example 37 | Example 38 | Example 39 | Example 40 | Example 41 | Example 42 |
| | | Adjusted isobutyl acetate concentration | | | Adjusted ethyl 2-methylbutyrate concentration | | | Adjusted ethyl isovalerate concentration | | |
| Aroma component concentration (ppb) | Ethyl tiglate | 500.1 | 500.1 | 500.1 | 500.1 | 500.1 | 500.1 | 500.1 | 500.1 | 500.1 |
| | Isobutyl acetate | 5002.1 | 502.1 | 7.1 | 2.1 | 2.1 | 2.1 | 2.1 | 2.1 | 2.1 |
| | Ethyl 2-methylbutyrate | 2.6 | 2.6 | 2.6 | 5002.6 | 52.6 | 3.6 | 2.6 | 2.6 | 2.6 |
| | Ethyl isovalerate | 3.5 | 3.5 | 3.5 | 3.5 | 3.5 | 3.5 | 5003.5 | 503.5 | 8.5 |
| | Isoamyl alcohol | 89.2 | 89.2 | 89.2 | 89.2 | 89.2 | 89.2 | 89.2 | 89.2 | 89.2 |
| | Isoamyl acetate | 0.3 | 0.3 | 0.3 | 0.3 | 0.3 | 0.3 | 0.3 | 0.3 | 0.3 |
| Sensory evaluation | Bean-derived earthy odor unsuitable for coffee beverage | 4 | 5 | 3 | 4 | 4 | 4 | 3 | 3 | 3 |
| | Odd taste unsuitable for coffee beverage | 4 | 4 | 4 | 4 | 5 | 4 | 3 | 4 | 4 |
| | Richness of aroma suitable for coffee beverage | 4 | 5 | 5 | 4 | 4 | 3 | 4 | 5 | 3 |

**[Table 8]**

| Table 8: Ethyl tiglate concentration fixed at about 500 ppb | | | | | | | |
|---|---|---|---|---|---|---|---|
| | | Example 43 | Example 44 | Example 45 | Example 46 | Example 47 | Example 48 |
| | | Adjusted isoamyl alcohol concentration | | | Adjusted isoamyl acetate concentration | | |
| Aroma component concentration (ppb) | Ethyl tiglate | 500.1 | 500.1 | 500.1 | 500.1 | 500.1 | 500.1 |
| | Isobutyl acetate | 2.1 | 2.1 | 2.1 | 2.1 | 2.1 | 2.1 |
| | Ethyl 2-methylbutyrate | 2.6 | 2.6 | 2.6 | 2.6 | 2.6 | 2.6 |
| | Ethyl isovalerate | 3.5 | 3.5 | 3.5 | 3.5 | 3.5 | 3.5 |
| | Isoamyl alcohol | 20089.2 | 5089.2 | 589.2 | 89.2 | 89.2 | 89.2 |
| | Isoamyl acetate | 0.3 | 0.3 | 0.3 | 500.3 | 50.3 | 5.3 |
| Sensory evaluation | Bean-derived earthy odor unsuitable for coffee beverage | 4 | 4 | 4 | 3 | 4 | 4 |
| | Odd taste unsuitable for coffee beverage | 5 | 5 | 3 | 3 | 5 | 3 |
| | Richness of aroma suitable for coffee beverage | 4 | 4 | 3 | 5 | 5 | 4 |

## Claims

1. Coffee beans containing 0.1 ppm or more of ethyl tiglate.

2. The coffee beans according to claim 1, wherein a content of ethyl tiglate is from 0.1 ppm to 300 ppm.

3. The coffee beans according to claim 1, wherein the coffee beans are green coffee beans or roasted coffee beans.

4. The coffee beans according to any one of claims 1 to 3, wherein the content of ethyl tiglate in the coffee beans is measured according to a measurement method below:
measurement method
in a test tube, 2 g of the coffee beans are placed, 150 mL of water and 4 mL of hexane are added, the mixture is distilled for 90 minutes in a distillation apparatus for quantification of essential oil, then, a hexane phase is adjusted to a volume of 4 mL, and the hexane phase is measured to determine the content of ethyl tiglate by gas chromatography-mass spectrometry using a gas chromatography-mass spectrometer below:
gas chromatography-mass spectrometer
model: 7890B/5977B [Agilent Technologies, Inc.]
column: DB-WAX UI (φ 0.25 mm × 30 m, film thickness 0.25 µm) [Agilent Technologies, Inc.]
injection method: pulsed split 15:1
pulse pressure: 25 psi
pulse time: 0.5 min
temperature: 220°C at sample inlet
column: a column temperature is maintained at 40°C for 5 minutes and increased at 10°C/min to 200°C
gas flow rate: helium (carrier gas) 1 mL/min
ion source temperature: 230°C
ionization method: EI
set mass number: m/z 113.

5. A method for producing coffee beans containing 0.1 ppm or more of ethyl tiglate, the method comprising:
(i) adding a yeast to raw material beans, the raw material beans being coffee cherries, wet parchment obtained by removing outer skin and pulp of coffee cherries, green coffee beans, or a combination of two or more of these; and
(ii) fermenting the raw material beans containing the yeast added.

6. The production method according to claim 5, wherein the yeast is a yeast belonging to one or more selected from the group consisting of the genus *Magnusiomyces* and the genus *Saprochaete.*

7. The production method according to claim 5, wherein the yeast is selected from the group consisting of *Magnusiomyces magnusii, Magnusiomyces tetraspermus, Saprochaete suaveolens, Saprochaete japonica, Saprochaete gigas, Saprochaete fungicola,* and a combination of two or more of these.

8. The production method according to claim 5, wherein in step (i), 0.01 g or more of isoleucine is added per kg of the raw material beans.

9. The production method according to claim 5, wherein in step (ii), the raw material beans are fermented for 1 hour or more.

10. The production method according to any one of claims 5 to 9, wherein a content of ethyl tiglate in the coffee beans is measured according to a measurement method below:
measurement method
in a test tube, 2 g of the coffee beans are placed, 150 mL of water and 4 mL of hexane are added, the mixture is distilled for 90 minutes in a distillation apparatus for quantification of essential oil, then, a hexane phase is adjusted to a volume of 4 mL, and the hexane phase is measured to determine the content of ethyl tiglate by gas chromatography-mass spectrometry using a gas chromatography-mass spectrometer below:
gas chromatography-mass spectrometer
model: 7890B/5977B [Agilent Technologies, Inc.]
column: DB-WAX UI (φ 0.25 mm × 30 m, film thickness 0.25 µm) [Agilent Technologies, Inc.]
injection method: pulsed split 15:1
pulse pressure: 25 psi
pulse time: 0.5 min
temperature: 220°C at sample inlet
column: a column temperature is maintained at 40°C for 5 minutes and increased at 10°C/min to 200°C
gas flow rate: helium (carrier gas) 1 mL/min
ion source temperature: 230°C
ionization method: EI
set mass number: m/z 113.

11. A coffee beverage comprising a liquid extract of the coffee beans described in any one of claims 1 to 4 or the coffee beans obtained by the production method described in any one of claims 5 to 9.

12. A coffee beverage comprising one or more compounds selected from the group consisting of ethyl tiglate, isobutyl acetate, ethyl 2-methylbutyrate, ethyl isovalerate, isoamyl alcohol, and isoamyl acetate.

13. The coffee beverage according to claim 12, comprising:
ethyl tiglate; and
one or more compounds selected from the group consisting of isobutyl acetate, ethyl 2-methylbutyrate, ethyl isovalerate, isoamyl alcohol, and isoamyl acetate.

14. The coffee beverage according to claim 12 or 13, wherein a content of ethyl tiglate is from 5 to 5000 ppb.

15. The coffee beverage according to any one of claims 12 to 14, satisfying one or more of (1) to (5) below:
(1) a content of isobutyl acetate is from 5 to 5000 ppb;
(2) a content of ethyl 2-methylbutyrate is from 1 to 5000 ppb;
(3) a content of ethyl isovalerate is from 5 to 5000 ppb;
(4) a content of isoamyl alcohol is from 100 to 20000 ppb; and
(5) a content of isoamyl acetate is from 5 to 1000 ppb.

16. The coffee beverage according to any one of claims 11 to 15, being a packaged beverage.
